# EUROPÄISCHE PATENTANMELDUNG

(11) **EP 0 729 215 A2**
(43) Veröffentlichungstag der Anmeldung: **28.08.1996**
(21) Anmeldenummer: 96101438.8
(22) Anmeldetag: 01.02.1996
(51) Int. Cl.: H02K 9/22

(54) **Elektrische Maschine mit einer Kühlvorrichtung**

(30) Priorität: 22.02.1995 DE 19506170
(71) Anmelder: SIEMENS AKTIENGESELLSCHAFT, 80333 München (DE)
(72) Erfinder: Kraus, Waldemar, D-90596 Schwanstetten (DE); Hilneder, Siegfried, D-91126 Schwabach (DE)

(57) **Zusammenfassung**

Die Erfindung bezieht sich auf eine elektrische Maschine mit einer Kühlvorrichtung die aus einzelnen, Kühlkanäle (3) enthaltenden, am Maschinengehäuse (1) befestigbaren Profilteilen (4) besteht. Ein guter Wärmeübergang zwischen dem Maschinengehäuse und den Kühlsegmenten wird dadurch sichergestellt, daß die Profilteile (4) zumindest auf ihrer Befestigungsseite jeweils eine ebene, geradlinige Auflagefläche (5) aufweisen, mit der sie an am Maschinengehäuse (1) ausgebildeten, tangential verlaufenden ebenen Planflächen (2) aufliegend angeordnet sind.

## Beschreibung

Die Erfindung bezieht sich auf eine elektrische Maschine mit einer Kühlvorrichtung, die aus einzelnen, röhrenförmige Kühlkanäle enthaltenden, am Maschinengehäuse befestigbaren Profilteilen besteht.

Eine solche Maschine ist durch die EP-A-0 424 867 bekannt. Bei dieser Maschine sind an deren als glattes zylindrisches Rohr ausgebildeten Maschinengehäuse mehrere mit Kühlkanälen versehene Profilteile angeordnet, die insgesamt einen das Maschinengehäuse auf seinem vollen Umfang umschließenden Profilmantel bilden. Mittels eines Lüfters wird durch die Kühlkanäle Kühlluft hindurchgeführt. Bei dieser Maschine müssen die Profilteile hinsichtlich ihres Krümmungsradius sehr genau an den Außenradius des Maschinengehäuses angepaßt werden, da ansonsten eine exakte Auflage der Profilteile auf dem Maschinengehäuse nicht erreicht wird und somit der Wärmeübergang vom Maschinengehäuse zu den Profilteilen nicht optimal ist.

Der Erfindung liegt die Aufgabe zugrunde, eine elektrische Maschine der gattungsgemäßen Art so weiterzubilden, daß ein guter Wärmeübergang zwischen dem Maschinengehäuse und den Profilteilen sichergestellt ist, ohne daß für die Profilteile ein hoher Fertigungsaufwand erforderlich ist.

Die Lösung der gestellten Aufgabe gelingt nach der Erfindung dadurch, daß die Profilteile zumindest auf ihrer Befestigungsseite jeweils eine ebene, geradlinige Auflagefläche aufweisen, mit der sie an am Maschinengehäuse ausgebildeten, tangential verlaufenden, ebenen Planflächen aufliegend angeordnet sind. Die Profilteile, die beispielsweise als Stranggußteile hergestellt sind, weisen aufgrund ihrer Herstellungsart schon eine Auflagefläche auf, die ohne weitere Nachbearbeitung bereits für eine gute Wärmeankopplung an die ebenfalls eben ausgebildeten Planflächen des Maschinengehäuses ausreicht. Für den Fall, daß noch eine Nachbearbeitung erforderlich ist, läßt sich diese an ebenen Flächen leichter und einfacher ausführen als an konvexen bzw. konkaven Flächen.

Sind die Profilteile lösbar an den Planflächen des Maschinengehäuses befestigt, so können bei einer notwendigen Reparatur die Profilteile leicht ausgetauscht werden.

Durch unterschiedliche Wärmedehnungskoeffizienten der Profilteile und des Maschinengehäuses oder durch unterschiedlich starke Erwärmung dieser beiden Teile bedingte mechanischen Verspannungen zwischen diesen Teilen können dadurch vermieden werden, daß die Profilteile in ihrem axialen Mittenbereich fest mit den Planflächen und zu den axialen Enden hin axial beweglich mit den Planflächen verbunden sind.

Durch das Einbringen einer Wärmeleitpaste zwischen der Auflagefläche und der Planfläche wird der Wärmeübergang vom Maschinengehäuse zu den Profilteilen wesentlich verbessert.

Eine Verbesserung des Wärmeübergangs kann auch dadurch erzielt werden, daß die Auflagefläche der Profilteile und die Planflächen des Maschinengehäuses mit einer einander entsprechenden, die Oberfläche vergrößernden Struktur versehen sind.

Soll die Maschine mittels einer Flüssigkeit gekühlt werden, dann ist es von Vorteil, daß an den Stirnseiten der Profilteile jeweils mindestens ein eine Anschlußöffnung aufweisender Anschlußkopf vorgesehen ist und in dem Anschlußkopf mindestens ein mit den Kühlkanälen des Profilteiles und der Anschlußöffnung in Strömungsverbindung stehender Zwischenkanal ausgebildet ist. An die Anschlußöffnung des Anschlußkopfes kann dann eine die Kühlflüssigkeit zu- bzw. abführende Flüssigkeitsleitung angeschlossen werden.

Dadurch, daß die Kühlkanäle der einzelnen Profilteile durch entsprechende Ausbildung des Zwischenkanales entweder insgesamt in Reihenschaltung oder in Reihen- und Parallelschaltung verbindbar sind, können äußere Verbindungsleitungen zumindest zum Teil eingespart werden.

Über an die Anschlußöffnungen der Anschlußköpfe angeschlossene Verbindungsleitungen können die einzelnen Profilteile mit ihren Kühlkanälen entweder in Reihe oder parallel geschaltet werden. Es wird dann jeweils nur an einer entsprechenden Stelle eine zuführende und eine abfuhrende Flüssigkeitsleitung angeschlossen.

Anhand eines in der Zeichnung dargestellten Ausführungsbeispieles wird die Erfindung nachfolgend näher beschrieben. Es zeigt:
- FIG 1: das Ständergehäuse einer elektrischen Maschine teilweise im Schnitt und teilweise in Stirnansicht,
- FIG 2: eine elektrische Maschine im Schnitt entlang der Linie II-II in FIG 1.

Am Ständergehäuse 1 einer elektrischen Maschine sind tangential verlaufende, ebene Planflächen 2 vorgesehen, an denen Kühlkanäle 3 enthaltende Profilteile 4 angeordnet sind. Die profilteile 4 weisen eine ebene Auflagefläche 5 auf, mit der sie auf der Planfläche 2 der Profilteile 4 satt aufliegen. Zur Verbesserung des Wärmeüberganges kann zwischen den beiden Flächen 2 und 5 eine Wärmeleitpaste eingebracht werden. Es besteht auch die Möglichkeit, an den Planflächen 2 und der Auflagefläche 5 jeweils eine die Oberfläche vergrößernde Struktur, z.B. in Form von Rillen oder Nuten, vorzusehen, wobei diese Rillen und Nuten so ausgebildet sind, daß sie in die zwischen den Rillen und Nuten bestehenden Vertiefungen des jeweils anderen Teiles eingreifen. Durch eine solche Oberflächenvergrößerung wird der Wärmeübergang ebenfalls verbessert.

An ihren stirnseitigen Enden sind die Profilteile 4 jeweils mit einem Anschlußkopf 6 versehen. Auf den in Umfangsrichtung liegenden Begrenzungsseiten weisen die Anschlußköpfe 6 jeweils eine Anschlußöffnung 7 auf. An diese Anschlußöffnungen 7 können Verbindungsleitungen 8 angeschlossen werden. Im Inneren der Anschlußköpfe 6 befindet sich jeweils ein Zwischenkanal 11, der die Kühlkanäle 3 strömungsmäßig mit den Anschlußöffnungen 7 verbindet. Für die Zu- und Abführung des vorzugsweise flüssigen Kühlmittels sind entsprechende Anschlußstutzen 9 und 10 am Ständergehäuse 1 vorgesehen.

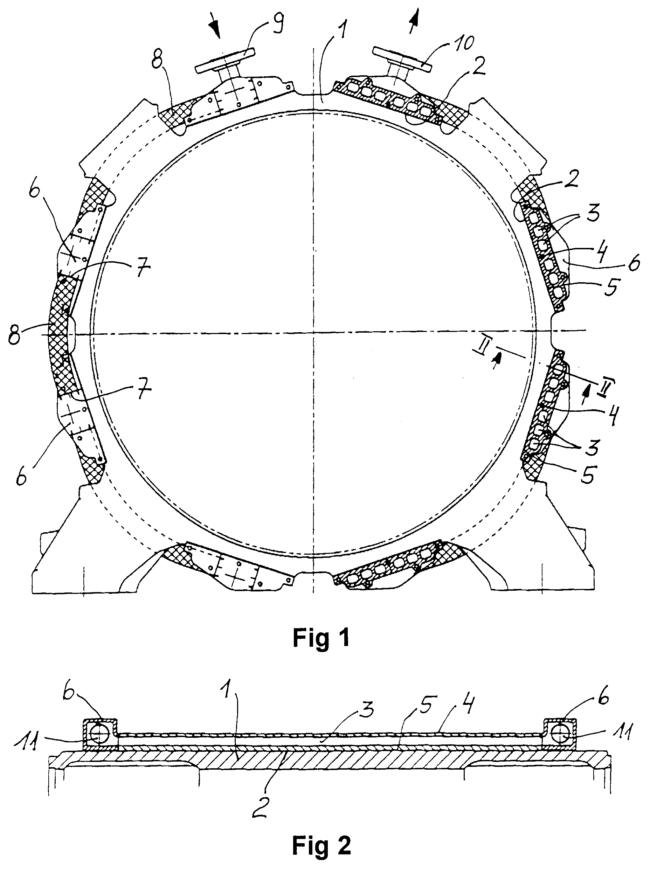

Gemäß dem in den FIG 1 dargestellten Ausführungsbeispiel sind die Profilteile 4 mit ihren Kühlkanälen 3 in Reihe geschaltet. Hierzu sind abwechselnd auf den beiden Stirnseiten der Maschine fortschreitend jeweils die Anschlußöffnungen 7 von zwei benachbarten Anschlußköpfen 6 über eine Verbindungsleitung 8 miteinander verbunden. Auf diese Weise wird das Kühlmittel mäanderförmig über das Ständergehäuse 1 von dem einen zu dem anderen Anschlußstutzen 9 und 10 geführt. Dies kann auch erreicht werden, wenn der in jedem Anschlußkopf 6 vorgesehene Zwischenkanal 11 so ausgebildet ist, daß über ihn die Kühlkanäle 3 eines Profilteiles 4 entweder einzeln in Reihe schaltbar oder auch gruppenweise parallel und die Gruppen dann in Reihe schaltbar sind. Durch eine derartige Ausbildung des Zwischenkanals 11 erübrigen sich dann auf einer Maschinenseite die äußeren Verbindungsleitungen 8 zwischen den zu verschiedenen Profilteilen 4 gehörenden Anschlußköpfen 6. Die Anschlußköpfe 6 können dann von vornherein ohne die in Umfangsrichtung liegenden Anschlußöffnungen 7 ausgeführt werden oder diese Anschlußöffnungen 7 werden mittels eines entsprechenden Verschlußteiles verschlossen.

Die Profilteile 4 können vorteilhafterweise als Strangprofile ausgebildet sein, wobei die Werkstoffwahl nach Korrosionsgesichtspunkten erfolgt. Als Verbindungsleitungen 8 können Hochdruckschläuche verwendet werden, die sich aufgrund ihrer Elastizität der Maschinenkontur anpassen. Durch die Ausbildung von in Umfangsrichtung geschlossenen Kühlkanälen 3 in den Profilteilen 4 und die Art der Verbindung der Profilteile 4 am Außenumfang des Standergehäuses 1 ist der Kühlkreis vollständig von der elektrischen Maschine getrennt, so daß ein Eindringen von Kühlmittel in die Maschine nicht möglich ist. Im Bedarfsfall können einzelne Profilteile 4, d.h. einzelne Kühlelemente, leicht ausgetauscht werden.

Eine derart mit Profilteilen 4 bestückte Maschine ist insbesondere für eine Flüssigkeitskühlung geeignet. Durch den Anbau der relativ flachen Profilteile 4 am Ständergehäuse 1 ergeben sich keine über die durch die Ständerfüße und den am Ständergehäuse 1 vorgesehenen Klemmenkasten bestimmte Kontur der Maschine hinausragenden Teile, so daß für die Kühlung praktisch kein zusätzlicher Platzbedarf entsteht. Eine solche flüssigkeitsgekühlte Maschine zeichnet sich durch ein gutes Geräuschverhalten aus, da die üblichen mit Luftkühlung verbundenen Strömungsgeräusche entfallen.

## Patentansprüche

1. Elektrische Maschine mit einer Kühlvorrichtung, die aus einzelnen, rohrförmige Kühlkanäle (3) enthaltenden, am Maschinengehäuse (1) befestigbaren Profilteilen (4) besteht, **dadurch gekennzeichnet**,
daß die Profilteile (4) zumindest auf ihrer Befestigungsseite jeweils eine ebene, geradlinige Auflagefläche (5) aufweisen, mit der sie an am Maschinengehäuse (1) ausgebildeten, tangential verlaufenden ebenen Planflächen (2) aufliegend angeordnet sind.

2. Elektrische Maschine nach Anspruch 1,
**dadurch gekennzeichnet**,
daß die Profilteile (4) lösbar an den Planflächen (2) befestigt sind.

3. Elektrische Maschine nach Anspruch 1 oder 2,
**dadurch gekennzeichnet,**
daß die Profilteile (4) in ihrem axialen Mittenbereich fest mit den Planflächen (2) und zu den axialen Enden hin axial beweglich mit den Planflächen (2) verbunden sind.

4. Elektrische Maschine nach Anspruch 1,2 oder 3,
**dadurch gekennzeichnet**,
daß zwischen der Auflagefläche (5) und der Planfläche (2) eine Wärmeleitpaste eingebracht ist.

5. Elektrische Maschine nach einem der vorhergehenden Ansprüche, **dadurch gekennzeichnet,**
daß die Auflagefläche (5) der Profilteile (4) und die Planflächen (2) des Maschinengehäuses (1) mit einer einander entsprechenden, die Oberfläche vergrößernden Struktur versehen sind.

6. Elektrische Maschine nach einem der vorhergehenden Ansprüche, **dadurch gekennzeichnet**,
daß an den Stirnseiten der Profilteile (4) jeweils mindestens ein eine Anschlußöffnung (7) aufweisender Anschlußkopf (6) vorgesehen ist und in dem Anschlußkopf (6) mindestens ein mit den Kühlkanälen (3) des Profilteiles (4) und der Anschlußöffnung (7) in Strömungsverbindung stehender Zwischenkanal ausgebildet ist.

7. Elektrische Maschine nach Anspruch 6,
**dadurch gekennzeichnet,**
daß die Kühlkanäle (3) der einzelnen Profilteile (4) durch entsprechende Ausbildung des Zwischenkanales (11) entweder insgesamt in Reihenschaltung oder in Reihen- und Parallelschaltung verbindbar sind.

8. Elektrische Maschine nach Anspruch 6 oder 7,
**dadurch gekennzeichnet**,
daß die einzelnen Profilteile (4) mit ihren Kühlkanälen (3) über an die Anschlußöffnungen (7) der Anschlußköpfe (6) angeschlossene Verbindungsleitungen (8) in Reihe oder parallel schaltbar sind.
